# EUROPEAN PATENT APPLICATION

(11) **EP 4 650 062 A1**
(43) Date of publication of application: **19.11.2025**
(21) Application number: 24176096.6
(22) Date of filing: 15.05.2024
(51) Int. Cl.: B08B 5/02, B08B 5/04, B08B 15/04, G02C 13/00

(54) **CLEANING DEVICE AND METHOD FOR CLEANING SUBSTRATES MOUNTED ON A CALOTTE-SHAPED SUBSTRATE HOLDER**

(71) Applicant: Carl Zeiss Vision International GmbH, 73430 Aalen (DE)
(72) Inventor: HOFER, Thomas, 73430 Aalen (DE)
(74) Representative: Tautz & Schuhmacher

(57) **Abstract**

Provided is a cleaning device (10) adapted for cleaning substrates (40) for spectacle lenses mounted on a calotte-shaped substrate holder (14). The cleaning device (10) comprises one or more ejection nozzles (18) for providing an inflow of a cleaning gas for cleaning the substrates (40) mounted on the calotte-shaped substrate holder (14), and one or more suction nozzles (20) for providing an outflow of at least a part of the cleaning gas flowed in. The cleaning device (10) is adapted such that a difference between a flow rate of the outflow of the cleaning gas and a flow rate of the inflow of the cleaning gas is 20% of the low rate of the inflow or less.

## Description

Provided are embodiments of a cleaning device adapted for cleaning substrates mounted on a calotte-shaped substrate holder, a system for cleaning and coating substrates, a method for cleaning multiple substrates mounted on a calotte-shaped substrate holder, and a method for manufacturing a spectacle lens. The embodiments are, thus, related to processes for cleaning and coating substrates and optionally substrates for spectacle lenses.

Some substrates, in particular optical substrates, such as spectacle lenses, are often subject to a coating process during their manufacturing process. In some cases, an anti-reflection coating may be applied to substrates. For the coating process, the substrates may be mounted on a calotte-shaped substrate holder, which is then inserted into a coating device to arrange the substrates at a predetermined position and in a predetermined orientation with respect to a particle source in the coating device. Examples for a coating device and a calotte-shaped substrate holder are described for instance in WO 2022/012955 A1 and WO 2004/108977 A2.

Prior to the actual coating process the substrates may require a cleaning treatment to remove possible dust and other contaminants present on the substrates mounted at the calotte-shaped substrate holder and/or present on the calotte-shaped substrate holder.

Conventional devices for cleaning ophthalmic components are described in US2003041883A1, US6783603B2, US2013117963A1, US9085017B2, US2011258807A1, CN204148193U, and CN208866076U. These devices, however, are not suitable for cleaning substrate mounted on a calotte-shaped substrate holder. Therefore, the cleaning process is conventionally carried out in a manual process including removing the substrates one after another from their respective mounting slots on the substrate holder by hand, applying a cleaning process to the substrates, and replacing the substrates by hand at their original mounting slots, which is considered as closest prior art. This requires a significant time effort for the cleaning process and bears a significant risk of swapping different substrates by unintentionally replacing them on a different mounting slot as the original mounting slot.

Moreover, cleaning substrates to be coated in a vacuum chamber of a coating apparatus bears the challenge to limit the contamination of the vacuum chamber with dust and/or other contaminants which may be detrimental for the achievable vacuum in the vacuum chamber and/or for the quality of the resulting coatings applied to the substrates.

It is thus desirable to provide a method and a device overcoming the disadvantages of the conventional cleaning process. Hence, it may be the objective technical problem to provide a method and a device for cleaning the substrates requiring a lower time effort and bearing a lower risk of swapping the substrates and contaminating the coating apparatus used for applying the coatings.

This problem is solved by a cleaning device, a system for cleaning and coating substrates, and a method having the features of the respective independent claims. Optional embodiments are provided in the dependent claims and the description.

In a first aspect, a cleaning device adapted for cleaning substrates for spectacle lenses mounted on a calotte-shaped substrate holder is provided. The cleaning device comprises one or more ejection nozzles for providing an inflow of a cleaning gas for cleaning the substrates mounted on the calotte-shaped substrate holder, and one or more suction nozzles (20) for providing an outflow of at least a part of the cleaning gas that flowed in. The cleaning device is adapted such that a difference between a flow rate of the outflow of the cleaning gas and a flow rate of the inflow of the cleaning gas is equal to 20% of the low rate of the inflow or less.

In another aspect, a system for cleaning and coating substrates is provided. The system comprises a calotte-shaped substrate holder suitable for holding the substrates during a cleaning and coating process, wherein the calotte-shaped substrate holder is rotatable in an azimuthal direction around a central axis of the calotte-shaped substrate holder. The system further comprises a cleaning device according to the disclosure.

In yet another aspect, a method being suitable for cleaning multiple substrates for spectacle lenses is provided. The method comprises arranging a calotte-shaped substrate holder in a vacuum chamber, the calotte-shaped substrate holder having the substrates mounted at mounting slots on the calotte-shaped substrate holder, wherein the mounting slots are arranged on the calotte-shaped substrate holder. The mounting slots may be arranged on the calotte-shaped substrate holder in one or more rows extending in a concentric manner around a central axis of the calotte-shaped substrate holder. The method further comprises arranging a cleaning device at a closable opening of the vacuum chamber, the cleaning device having one or more ejection nozzles for providing an inflow of a cleaning gas for cleaning the substrates mounted on the calotte-shaped substrate holder and one or more suction nozzles for providing an outflow of at least a part of the cleaning gas that flowed in. Moreover, the method comprises cleaning the substrates by providing an inflow of a cleaning gas through one or more ejection nozzles onto the substrate holder and providing an outflow of at least a part of the ejected cleaning gas into one or more suction nozzles, wherein a difference between a flow rate of the outflow of the cleaning gas and a flow rate of the inflow of the cleaning gas is equal to 20% of the low rate of the inflow or less, and providing a rotational movement of the calotte-shaped substrate holder in an azimuthal direction around the central axis with respect to the first cleaning arm. Furthermore, the method comprises removing the cleaning device from the closable opening of the vacuum chamber.

In yet another aspect, a method for manufacturing a spectacle lens from a substrate for a spectacle lens is provided. The method comprises cleaning the substrate for the spectacle lens using a method according to the disclosure. Moreover, the method comprises closing the closable opening of the vacuum chamber and evacuating the vacuum chamber. Furthermore, the method comprises applying an optical coating to the substrate for the spectacle lens in the vacuum chamber.

A substrate for a spectacle lens may be an optical substrate for manufacturing a spectacle lens from the substrate. The substrate may have suitable dimensions for manufacturing one spectacle lens from one substrate. The substrate may form a precursor for an optical product. Alternatively, the substrate may be an (uncut) almost finished optical product which will be finished after completion of the coating process. The substrate may be a spectacle lens blank, a semi-finished spectacle lens product or a finished spectacle lens product and may in particular meet requirements specified in EN ISO 13666:2012. "Multiple substrates for spectacle lenses" may mean multiple substrates, wherein each substrate is intended for manufacturing one spectacle lens based on the respective substrate. Throughout the disclosure, the term "substrate" may in general relate to a substrate for a spectacle lens unless explicitly specified otherwise.

A lens blank may relate to an unprocessed precursor of a spectacle lens, such as a lens blank having an unprocessed front surface and an unprocessed back surface. The lens blank may be provided in a molding process. The lens blank may, however, also relate to a partly processed precursor of a spectacle lens. For instance, the lens blank may have a front surface which is partly or fully processed, and which may be covered with a protective foil or coating. As generally understood and defined in section 3.8.1 of ISO 13666:2019 (E), a lens blank may be a piece of optical material with one optically finished surface for the making of a lens.

As generally understood and defined in section 3.5.2 of ISO 13666:2019 (E), a spectacle lens may be an ophthalmic lens according to section 3.5.1 of ISO 13666:2019 (E) worn in front of, but not in contact with, the eyeball.

Cleaning a substrate may relate to a treatment including removing contaminants and/or moisture and/or any other undesired objects from the substrate which, if not removed, may compromise the coating result. The cleaning process may include subjecting the substrates to a stream of a cleaning gas to remove such contaminants, wherein the cleaning gas may comprise a gaseous fluid and/or a liquid fluid. The cleaning gas may in particular comprise or consist of air and/or nitrogen. The cleaning gas may be ejected through one or more ejection nozzles onto the substrate and may be collected by one or more suction nozzles and/ or by an aspiration after being in contact with at least one surface of the substrates.

The suction nozzles and the ejection nozzles may be connected with suitable hosing and/or tubing for supplying the cleaning gas and/or the vacuum to the suction nozzles and/or the ejection nozzles. The tubing and/or hosing and/or connected valves may be attached to the first cleaning arm and/or the second cleaning arm.

The cleaning gas may be filtered air used for cleaning the substrates and/or the substrate holder. Cleaning the substrates and/or the substrate holder may include removing dust and/or other contaminants from the substrate and/or from the substrate holder. The cleaning gas may be a fluid. Optionally, the cleaning gas may comprise or consist of nitrogen and/or ambient air. The cleaning gas may be chosen such as to contain no or merely a negligible amount of moisture and/or water. The cleaning gas may comprise or consist of filtered air, wherein the filtered air may comprise ambient air which has undergone a filtration process to remove dust particles and/or other contaminants from the ambient air prior to using the filtered air for cleaning the substrates and/or the substrate holder. The cleaning gas may be a fluid and may comprise a vapor, such as a vapor of a cleaning liquid.

An inflow of the cleaning gas may be a stream of cleaning gas ejected by the one or more ejection nozzle(s) and directed into the vacuum chamber. An outflow of the cleaning gas may be a stream of cleaning gas sucked by the suction nozzles and directed outwards from the vacuum chamber.

The flow rate of the inflow of the cleaning gas may be a measure for a volume of cleaning gas ejected by the ejection nozzle(s) per time unit. The flow rate of the inflow of the cleaning unit may be a measure for a volume of cleaning gas streaming into the vacuum chamber. The flow rate of the outflow of the cleaning gas may be a measure for a volume of cleaning gas sucked in by the suction nozzle(s) and/ or the aspiration per time unit. The flow rate of the outflow of the cleaning unit may be a measure for a volume of cleaning gas streaming out the vacuum chamber due to a suction, i.e. a force due to a pressure below the ambient pressure, provided by the suction nozzle(s). The difference between the flow rate of the outflow of the cleaning gas and the flow rate of the inflow of the cleaning gas being 20% of the low rate of the inflow or less means that a deviation of the inflow flow rate from the outflow flow rate equals 20% or less. In other words, the outflow flow rate may be maximum 20% higher or lower than the inflow flow rate.

The calotte-shaped substrate holder may be simply referred to as substrate holder. The substrate holder being calotte-shaped means that the shape of the substrate holder follows the shape of a calotte. Hence, the substrate holder may be domed, wherein the dome may have the shape of a half sphere or any other portion of a sphere having the shape of a spherical cap or spherical dome. The calotte-shaped substrate holder may have the appearance of a spherical cap but may deviate from the strict mathematical shape of a spherical cap. The calotte-shaped substrate holder may be rotationally symmetric around the central axis, wherein the central axis may form a central axis of a sphere defining the calotte or spherical cap describing the shape of the substrate holder. The calotte-shape of the substrate holder may have a radius of curvature in the range from 0,5 m to 2 m and in particular a radius of curvature in the range from 0,5 m to 1 m, i.e., the sphere describing the shape of the calotte holder may have a radius of curvature in the range from 0,5 m to 2 m and in particular a radius of curvature in the range from 0,5 m to 1,2 m or 0,8 m to 1,2 m. In case the radius of curvature varies for different altitudinal positions of the calotte-shape, the radius of curvature may be in the specified range at any position. In other words, any radius of curvature which the calotte-shaped substrate holder exhibits may be well within the specified range. The azimuthal direction and the altitudinal direction may relate to a horizontal coordinate system. The azimuthal direction, altitudinal direction and radial direction used throughout this disclosure may correspond to this sphere describing the shape of the calotte-shaped substrate holder, wherein the azimuthal direction and the altitudinal direction extend on the surface of such a sphere and the radial direction extends perpendicular to the surface of such a sphere and, hence, towards the center of said sphere. The altitudinal direction of the substrate holder may correspond to the altitudinal direction of the cleaning arm(s). A rotational movement of the substrate holder around its central axis may be provided by a motor unit rotating the calotte-shaped substrate holder around its central axis. The calotte-shaped substrate holder may comprise several parts, such as four segments, which may together form the calotte-shaped substrate holder.

The calotte-shaped substrate holder being arranged in a vacuum chamber means that the calotte shaped substrate holder is at least partially arranged in the vacuum chamber. In other words, a part of the calotte-shaped substrate holder may extend outside of the vacuum chamber when the closable opening of the vacuum chamber is open. A method step of arranging the calotte-shaped substrate holder in the vacuum chamber does not necessarily require the substrate holder being outside of the vacuum chamber prior to arranging it in the vacuum chamber. Instead, the method step of arranging the calotte-shaped substrate holder in the vacuum chamber may consist of using the calotte-shaped substrate holder arranged at least partially inside of the vacuum chamber.

Mounting slots are such slots formed in the calotte-shaped substrate holder which are adapted to receive a substrate while exposing at least one surface of the substrate for the coating process. Each of the mounting slots may comprise a hole in the calotte-shaped substrate holder on which a substrate may be placed, such that the coating may be applied to the surface through the hole in the whole in the substrate holder. The hole of the mounting slot may be adapted to support the substrate at the edge or rim of the substrate while exposing a central region of the substrate to be accessible for the coating process.

The disclosure provides the advantage that the process of cleaning the substrates may be carried out while the substrates are mounted on a calotte-shaped substrate holder arranged inside a vacuum chamber of a coating device, wherein an intake of contaminations, such as dust, into the vacuum chamber by the cleaning process is avoided or limited. Due to the outflow rate of the cleaning gas differing by 20% or less from the inflow rate of cleaning gas, the suction of ambient air into the vacuum chamber via other channels than the ejection nozzles can be avoided or limited. Therefore, the amount of fluid volume sucked out of the vacuum chamber can be provided entirely or almost entirely by the inflow of cleaning gas via the ejection nozzles. Accordingly, a controlled stream of cleaning gas can be achieved. Moreover, this allows providing only conditioned cleaning gas into the vacuum chamber, which may have undergone filtering and/or other cleaning steps prior to being ejected from the one or more ejection nozzles in the vacuum chamber.

This provides the advantage that the risk of contaminations on the substrates can be avoided. This, in turn, provides the advantage that flaws of optical coatings applied by the coating apparatus can be reduced or avoided. Moreover, this provides the advantage that the effort for evacuating the vacuum chamber may be reduced as the amount of moisture contaminating the vacuum chamber may be reduced.

Moreover, optionally, the cleaning process may be carried out at least partly within the coating device, i.e., while the calotte-shaped substrate holder is arranged inside a coating device, in which the subsequent coating process may be carried out. This may render any movement of the calotte-shaped substrate holder with the substrates mounted thereto after the cleaning process obsolete. Instead, it may allow commencing the coating process right after the cleaning process and by this to minimize the risk of any further contaminations affecting the substrates after the cleaning process.

At least one of the one or more suction nozzles may be located adjacent to the one or more ejection nozzles. A suction adjacent to the one or more ejection nozzles may provide an outflow, which may effectively reduce light contaminations on the substrate and/or on the substrate holder. At least one ejection nozzle and at least one suction nozzles may be integrated in a nozzle assembly.

At least one of the one or more suction nozzles may be located at a bottom of the cleaning device and/ or on at least one side wall of the cleaning device. Providing a suction apart from to the one or more ejection nozzles may provide an additional degree of freedom for adjusting and/or controlling of the outflow. By providing at least one of the one or more suction nozzles at the bottom of the cleaning device, contaminations which are not removed by the one or more suction nozzles adjacent to the one or more ejection nozzles may be guided through the vacuum chamber without adhering to surfaces of the vacuum chamber. The at least one suction nozzle at the bottom of the cleaning device may be arranged adjacent and/or at the same height level of the bottom of the vacuum chamber in which the calotte-shaped substrate holder is mounted.

The difference between the flow rate of the outflow of the cleaning gas and the flow rate of the inflow of the cleaning gas may be 10% of the low rate of the inflow or less. Moreover, the flow rate of the outflow of the cleaning gas may essentially correspond to the flow rate of the inflow of the cleaning gas. "Essentially correspond" in this context means that the differences in magnitude between the inflow rate and the outflow rate may be negligible, i.e. that the differences in magnitude between the inflow rate and the outflow rate may be limited by technically unavoidable fluctuations and/or in a range in which the difference does not result in any noticeable effect. This may be achieved by providing the ejection nozzles and the suction nozzles in a suitable number and with suitable dimensions. For instance, the total cross-sectional area of the ejection nozzles may correspond or be similar to the total cross-sectional area of the suction nozzles. In case the pressure and, thus, the streaming velocity through the ejection nozzles differs from a streaming velocity through the suction nozzle, their cross-sectional areas may be adapted to compensate this difference. Alternatively or additionally, the ratio between the inflow flow rate and the outflow flow rate may be at least partially achieved by adjusting a pressure for providing the cleaning gas and a pressure for providing the vacuum for the suction nozzles.

The cleaning device may further comprise a first cleaning arm having an arc shape, wherein at least one of the one or more ejection nozzles is arranged at the first cleaning arm. Alternatively or additionally, at least one of the one or more suction nozzles may be arranged at the first cleaning arm. This may allow arranging the one or more ejection nozzles and/or the one or more suction nozzles in direct vicinity to the substrates mounted at the substrate holder. Optionally, the arc shape of the first cleaning arm may be adapted to the curved cross-sectional shape of the calotte shape of the substrate holder. This may allow arranging multiple ejection nozzles and/or multiple suction nozzles in equal distance to the substrate mounted at the substrate holder. The second cleaning arm may be arc-shaped with a radius of curvature in the range from 0,5 m to 2 m and a length in an altitudinal direction in the range from 0,5 m to 2 m. The size and shape of the first cleaning arm may be adapted to the cross-sectional shape of the calotte-shaped substrate holder.

The arc shape of the first and/or second cleaning arm may relate to a spherical arc shape, i.e., the shape of the first and/or second cleaning arm may extend according to an arc forming a part of a surface of a mathematical sphere. The sphere may correspond to the sphere describing the shape of the calotte-shaped substrate holder or may have a larger or smaller radius of curvature. The arc shape may have the appearance of a sphere but may deviate from the strict mathematical shape of a spherical cap. Accordingly, the first cleaning arm may have a circular arc-shape. The radius of curvature of the arc-shape of the first cleaning arm and/or second cleaning arm may be identical to the radius of curvature of the calotte-shaped substrate holder or may deviate by not more than 20% and optionally not more than 10% from the radius of curvature of the calotte-shaped substrate holder. However, the calotte-shaped substrate holder and/or the first and/or second cleaning arm may have a shape deviating from a spherical shape. In particular, a radius of curvature may vary along the altitudinal position of the calotte-shaped substrate holder and/or along the altitudinal position of the first and/or second cleaning arm. The radius of curvature may decrease for lower altitudinal positions of the calotte-shaped substrate holder and/or the first and/or second cleaning arm, respectively. However, the calotte-shaped substrate holder and/or the first and/or second cleaning arm may be adapted such that at any altitudinal position of the calotte-shaped substrate holder and/or of the first and/or second cleaning arm the radius of curvature is in a range from 0,5 m to 2 m.

Arranging the first cleaning arm over the calotte-shaped substrate holder means that the first cleaning arm is arranged adjacent to the outer surface of the calotte-shaped substrate holder, when the calotte-shaped substrate holder is arranged such that the opening of the calotte-shaped substrate holder is oriented in a downward direction. This may correspond to the typical orientation of the calotte-shaped substrate holder for the intended use of coating the substrates mounted to the calotte-shaped substrate holder. However, in principle other orientations of the calotte-shaped substrate holder are possible. Likewise, arranging the first cleaning arm underneath the calotte-shaped substrate holder means that the first cleaning arm is arranged adjacent to the inner surface of the calotte-shaped substrate holder, when the calotte-shaped substrate holder is arranged such that the opening of the calotte-shaped substrate holder is oriented in a downward direction.

The one or more ejection nozzles may be directed in a radial direction with respect to the arc-shaped first cleaning arm. In particular, the ejection nozzles may be directed to that side of the cleaning arm, at which the substrates are arranged during a cleaning process. The ejection nozzles and/or suction nozzles may be oriented at an angle in a range from 30° to 60°with respect to the surface of the substrates, which provide a suitable stream of cleaning gas over the substrates from the ejection nozzles to the suction nozzles. In case a cleaning arm is arranged over the calotte-shaped substrate holder, the ejection nozzles may be directed in a radially inward direction. If the cleaning arm is directed underneath the calotte-shaped substrate holder, the ejection nozzles may be directed in a radially outward direction. The cleaning arm may be arranged at a predetermined position and orientation with respect to the calotte-shaped substrate holder. The cleaning arm may be adapted such that the one or more movable ejection nozzles may be oriented in a radial direction or in a direction having a predetermine angle with respect to the substrates in any altitudinal position along the cleaning arm. However, the one or more movable ejection nozzles may be adapted to have a variable orientation, which may allow adjusting the orientation of the one or more ejection nozzles to the mounting slots or substrates to be addressed. Likewise, the one or more suction nozzles may be directed in a radial direction and/or may be adapted to have a variable position. The orientation of the one or more ejection nozzles and the one or more suction nozzles may be chosen in dependence on a distance between the one or more ejection nozzles and the one or more suction nozzles. According to some embodiments, the ejection nozzles and/or the suction nozzles may be oriented such as to have an angle in a range from 30° to 60°with respect to the surface of the substrates, to which they are directed.

The one or more ejection nozzles may comprise multiple ejection nozzles distributed in an altitudinal direction on the arc-shaped first cleaning arm. The multiple ejection nozzles may be provided such that a fluid stream ejected by the multiple ejection nozzles covers the entire section of the calotte-shaped substrate holder covered by the respective cleaning arm. This may allow covering multiple rows of mounting slots by the stream of cleaning gas ejected through the multiple ejection nozzles and may, thus, render a movement of one or more ejection nozzles obsolete.

The cleaning device may further comprise a second cleaning arm having an arc shape and one or more ejection nozzles arranged at the second cleaning arm, wherein the one or more ejection nozzles are directed in a radial direction with respect to the arc-shaped second cleaning arm. The second cleaning arm may have an arc-shape with a radius of curvature in the range from 0,5 m to 2 m and a length in an altitudinal direction in the range from 0,5 m to 2 m. The second cleaning arm may be adapted in an identical or similar manner to the first cleaning arm. However, the orientation or direction of the ejection nozzle(s) and/or the suction nozzle(s) may be different as compared to the first cleaning arm in order to direct the ejection nozzle(s) and suction nozzle(s) to the calotte-shaped substrate holder when arranged at the opposite side of the calotte-shaped substrate holder as compared to the first substrate holder. In general, all features and properties described with respect to the first cleaning arm may also apply to the second cleaning arm and vice versa. Moreover, disclosure referring to a cleaning arm in general may apply to the first cleaning arm and the second cleaning arm in the same manner.

The cleaning device may be adapted such that the inflow of the cleaning gas for cleaning the substrates is provided by the one or more ejection nozzles arranged at the first cleaning arm and by the one or more ejection nozzles arranged at the second cleaning arm simultaneously such that the substrates are simultaneously subjected to the inflow of cleaning gas from at least two directions. This may allow applying a similar or an equal pressure to the substrates from opposing sides. Therefore, this may allow reducing or avoiding a risk of unintentionally moving the substrate within the mounting slots and/or out of the mounting slots of the substrate holder. Moreover, in case the substrates are mounted on flippable mounts, which may be flippable to change the orientation of the substrates inside the vacuum chamber between two subsequent coating processes without venting the vacuum chamber, the simultaneous inflow of cleaning gas from at least two directions onto the substrate may reduce the risk of unintentionally flipping at least partially one or more of the flippable mounts when applying the inflow of cleaning gas onto the substrate. When providing the inflow from two opposing sides, the flippable mount may refrain from flipping when being exposed to the inflow of the cleaning gas.

At least one of the suction nozzles may be arranged separate from the first and second cleaning arm. Optionally, the at least one suction nozzle may be arranged underneath the calotte-shaped substrate holder and/or underneath the first cleaning arm and optionally the second cleaning arm. The at least one suction nozzle, which is located underneath the first and the optionally second cleaning arm, may be the aspiration. This may provide the advantage that dust particles being subjected to gravitation and sinking to the bottom of the vacuum chamber may be efficiently sucked into the one or more suction nozzles.

The cleaning device may comprise one or more fixation elements for fixating the substrates mounted on a calotte-shaped substrate holder while subjecting the substrates to the inflow of the cleaning gas. The one or more fixation elements may be adapted to fixate the substrates by fixating a holding element in which the respective substrates are mounted. The substrate holder may be provided as or comprise a flippable mount. Providing the fixation elements may allow for avoiding an unintentional flipping caused by the inflow. Therefore, the risk of coating errors (e.g., double coating, no coating, etc.) based unintentional flipping may be reduced or avoided. The fixation elements may be adapted to fixate the substrates by applying mechanical force and/or a magnetic force and/or an electrical force to the respective holding element. The magnetic force may be provided by a permanent magnet and/or an electromagnet. The electromagnet may be adapted to change a polarity of the magnetic field provided by the electromagnet. The flippable mount and/or the substrate holder may be adapted to fixate the flippable mount in a predetermined position when the fixation element provides the magnetic field with a first polarity and to flip the flippable mount to a second predetermined position when the fixation element provides the magnetic field with a second polarity being different from the first polarity.

The cleaning system may be used for cleaning substrate mounted on a calotte-shaped substrate holder being arranged in a vacuum chamber having a closable opening. The cleaning device may be arranged at the opening such that the first cleaning arm and optionally the second cleaning arm at least partially surround the calotte-shaped substrate holder in an altitudinal direction. For instance, the first cleaning arm may extend on top of a flank of the calotte-shaped substrate holder, while the second cleaning arm may extend underneath the flank of the calotte-shaped substrate holder. By this, the first cleaning arm and optionally the second cleaning arm at least partially surround the calotte-shaped substrate holder in an altitudinal direction.

The first cleaning arm and the second cleaning arm may be arranged parallel to each other and spaced out from each other in a vertical direction. This may allow arranging the calotte-shaped substrate holder in-between the first and second cleaning arm, such that the inner surface of the calotte-shaped substrate holder may be exposed to the second cleaning arm and the outer surface of the calotte-shaped substrate holder may be exposed to the first cleaning arm or vice versa. In other words, the first and second cleaning arm may be adapted and arranged to at least partly enclose the cross-section of the sheath wall of the calotte-shaped substrate holder. Accordingly, the ejection nozzles of the first cleaning arm and the ejection nozzles of the second cleaning arm may be at least partly directed towards each other. This may allow simultaneously cleaning a front surface and a back surface of the substrate.

The vertical spacing between the first cleaning arm and the second cleaning arm may be in a range from 0,01 m to 0,5 m and optionally from 0,05 m to 0,2 m. Optionally the vertical spacing between the first cleaning arm and the second cleaning arm may be adjustable. This may facilitate arranging the calotte-shaped substrate holder between the cleaning arms. Alternatively or additionally, the vertical spacing between the first cleaning arm and the second cleaning arm may be set such that a distance between the first cleaning arm and a surface of a substrate mounted on the calotte-shaped substrate holder facing the first cleaning arm is in a predetermined range, such as from 0,01 m to 0,1 m. This may leave sufficient space for arranging the calotte-shaped substrate holder between the first and second cleaning arm and may allow a distance between the cleaning arms and the substrates mounted in the mounting slots of the calotte-shaped substrate holders sufficiently small to achieve a suitable stream of cleaning gas from the ejection nozzles to clean the substrates.

In the above-disclosed method, providing the rotational movement of the calotte-shaped substrate holder in the azimuthal direction around the central axis with respect to the first cleaning arm, may comprise rotating the calotte-shaped substrate holder by at least 360° around the central axis. This may allow applying a stream of cleaning gas ejected through the ejection nozzles in the first and/or second cleaning arm along an altitudinal direction of the calotte-shaped substrate holder over the entire surface of the calotte-shaped substrate holder. Hence, although the ejection nozzles may be arranged solely at the cleaning arms covering only a small portion of the entire calotte-shaped substrate holder, the entire calotte-shaped substrate holder and all mounting slots provided therein in one or more rows extending along concentrical circles at the calotte-shaped substrate holder may be subjected to the cleaning process.

The arc-shaped first cleaning arm of the cleaning device may be arranged over the calotte-shaped substrate holder. In this case, the method may further comprises arranging an arc-shaped second cleaning arm of the cleaning device underneath the calotte-shaped substrate holder such that the arc-shaped second cleaning arm of the cleaning device extends in the altitudinal direction of the calotte-shaped substrate holder over at least some of the rows of mounting slots. Accordingly, the step of cleaning the substrates may further comprise ejecting a cleaning gas through one or more ejection nozzles provided at the second cleaning arm onto the substrate holder and sucking at least a part of the ejected cleaning gas into one or more suction nozzles provided at the second cleaning arm and providing a rotational movement of the calotte-shaped substrate holder in an azimuthal direction around the central axis with respect to the second cleaning arm. This may allow simultaneously cleaning an upper surface and a lower surface of the substrates by applying the cleaning gas from one side via the first cleaning arm and from the other side via the second cleaning arm. This may render an additional step for flipping the substrates obsolete and, hence, may reduce the required time and costs for the cleaning process. Moreover, a risk of contaminating or unintentionally swapping the substrates in a flipping process can be avoided or reduced. However, according to other embodiments the method may further comprise a step of flipping all or some of the substrates mounted to the substrate holder. The flipping may be carried out by hand or in an at least partly automated manner. Optionally, the flipping process may be carried out using a magnetic force. A flipping step may be advantageous for such embodiments of cleaning devices, which do not offer simultaneously cleaning the substrates from both sides.

The method may comprise arranging the calotte-shaped substrate holder in a coating device and the step of arranging the first arc-shaped second cleaning arm of the cleaning device over or underneath the calotte-shaped substrate. And the method may comprise arranging the cleaning device adjacent to the coating device. Moreover, the method may further comprise removing the cleaning device from the coating device after cleaning the substrates. This allows carrying out the cleaning process while the calotte-shaped substrate holder is arranged at least partly inside a coating device. This may render a rearrangement of the substrate holder between the completion of the cleaning process and the commencement of the coating process obsolete and may, hence, reduce the required time for the cleaning and coating process as well as reduce the risk of contaminations between the cleaning and coating process. Moreover, this may render a need for providing a cleaning device capable of housing the entire calotte-shaped substrate holder during the cleaning process obsolete. Instead, the cleaning device may be arranged such as to adjoin the coating device housing the calotte-shaped substrate holder. For instance, an opening provided for inserting the calotte-shaped substrate holder into the coating device may be used by the cleaning device for accessing the calotte-shaped substrate holder arranged inside the coating device. Moreover, this may bear the advantage that the cleaning device may be subsequently used in combination with different coating devices. Hence, a cleaning device may be used for several coating devices. This may allow using a cleaning devices in combination with a plurality of coating devices.

The coating device and/or the cleaning device may comprise a rubber lip to seal the interface between the opening of the coating device and the cleaning device arranged next to the opening of the cleaning device. This may at least partially prevent an ingress of contaminants from the outside.

A rotational movement of the calotte-shaped substrate holder with respect to the cleaning arm or vice versa may be realized by providing at least one of the following movements: rotating the calotte-shaped substrate holder in the azimuthal direction around the central axis, and moving the first cleaning arm in an azimuthal direction around the calotte-shaped substrate holder. A mount for holding the calotte-shaped substrate holder inside a coating device may be motorized with a motor unit to provide the desired rotational movement.

The cleaning device may be provided as a separate device from the coating device and the vacuum chamber of the coating device. The cleaning device may be sequentially usable with multiple coating devices and/or multiple vacuum chambers. The cleaning device may comprise or may be mounted on a mobile base frame. The mobile base frame may comprise wheels. The mobile base frame may allow arranging the cleaning device at the closable opening of the vacuum chamber. The cleaning device may be docked to the vacuum chamber at the closable opening of the vacuum chamber. The first and/or seond cleaning arm may be adjustable in their height to adjust the positioning and/or orientation of the first and/or second arm with respect to the calotte-shaped substrate holder.

Alternatively or additionally, the height of the cleaning device may be adjustable to fit to the height and/or extension of the closable opening of the vacuum chamber.

The cleaning device may comprise a drive unit to drive a rotational movement of the calotte-shaped substrate holder arounds its central axis. The drive unit may allow rotating the substrate holder by 360° around its central axis. This may allow driving the calotte-shaped substrate holder independently from a steering control of the coating apparatus. Moreover, the cleaning device may be adapted to control the ejection nozzles and the suction nozzles in an indepedendent manner from the control of the coating apparatus. The cleaning device may be operated in a fully independent manner of any coating device.

The cleaning of the substrate mounted at the calotte-shaped substrate holder may be carried out directly prior to the coating process. For carrying out the cleaning process, the cleaning device may be arranged at and optionally locked to the closable opening of the vacuum chamber. After completing the cleaning process, the cleaning device may be removed from the closable opening of the vacuum chamber. The vacuum chamber may then be closed and evacuated and the coating process may be carried out.

The cleaning device may comprise a cover to cover the opening of the cleaning device which faces the vacuum chamber when arranged at the closable opening of the vacuum chamber. The cover may allow covering the opening when the cleaning device is not arranged at the closable opening of a vacuum chamber. This may allow covering the cleaning device when not in use and, thus, avoid or reduce the ingress of dust and/or other contaminants into the cleaning device while not in use. The cover may comprise a roller blind. Optionally, the cover may be used to partially cover the opening of the cleaning device while in use, wherein the cover may be partially closed such that the remaining opening is sufficient to carry out the cleaning process. This may reduce an ingress of contamintants into the vacuum chamber and/or into the cleaning device during the cleaning process.

The cleaning device may comprise one or more filter elements for filtering the cleaning gas prior to ejecting it from the one or more ejection nozzles and/or after collecting the cleaning gas via the one or more suction nozzles. Alternatively or additionally, one or more filter elements may be provided separate from the cleaning device, which may be used for providing filtered cleaning gas to the cleaning device. This may allow reducing or avoiding contaminants in the cleaning gas. The cleaning gas may be recycled and used again for ejecting it multiple times from the ejection nozzles. Optionally, the recycling of the cleaning gas comprises a filtering process of the cleaning gas.

The one or more suction nozzles may be provided at a bottom of the cleaning device. This may allow collecting a stream of cleaning gas sinking to the bottom of the cleaning device after being ejected onto the substrates mounted at the calotte-shaped substrate holder. The one or more suction nozzles may comprise or be provided as perforations in a bottom plate of the cleaning device. The one or more suction nozzles may be the aspiration. The aspriation may have the andvantage to provide a suction with a higher flow rate in comparison to the one or more suction nozzles. Due to this, the outflow may be further adjusted. Therefore, a desired difference between the inflow and the outflow until a compensation of the inflow and the outflow may be better controllable.

The cleaning device may comprise a movable element. The movable element may be postioned in such a way that it covers the calotte-shaped substrate holder on the open side of the vacuum chamber. The movable element may be a roller blind to manually covering the calotte-shaped substrate holder, while maintaining the space underneath the calotte-shaped substrate holder uncovered. Due to this, released particles of the calotte-shaped substrate holder may be better conveyed via the controlled airflow and do not remain inside the vacuum chamber.

A suction generator for providing the vacuum and/or suction at the suction nozzles may be integrated in the mobile base frame carrying the cleaning device. The one or more perforations of the bottom plate of the cleaning device may match one or more openings of the suction generator. This may allow for the generation of a large-scale air stream that may suck the cleaning gas into the suction nozzles.

The cleaning device and optionally further components, such as the suction generator and/or a pressure generator for ejecting the cleaning gas, may be operable with electrical energy. Alternatively or additionally, pressured cleaning gas and/or suction may be provided to the cleaning device from an external source. Optionally, the electrical energy may be supplied as DC voltage of 24V. This may render the application of low voltage guidelines obsolete. The electrical energy may be provided by one or more regular batteries. This may allow providing the cleaning device without integrated lithium-ion rechargable batteries, which allows reducing potential risks of endangerments, such as short-circuits, overheating, fire hazards and/or explosion hazards. Therefore, this may reduce the risk of damages in a production area, which may otherwise result in costly damages of other expensive machineries used in the production area. Moreover, this may facilitate the transportation of the cleaning device via air cargo and/or sea cargo, as for these kinds of transportation the transport of rechargeable battery blocks may be restricted or forbidden, for instance for items classified in UN 3481. Moreover, this may facilitate obtaining a "CE" label for the cleaning device by satisfying the corresponding requirements for safety, health protection and/or environmental protection.

The cleaning device may comprise one or more plugs and/or sockets for connecting the supply with electrical energy and/or with pressured cleaning gas and/or with suction and/or vacuum.

The cleaning device may be provided without a programmable logic controller (PLC). The cleaning device may be controlled by using analog controll means, which may include adjustable end switches and/or relays and/or cams and/or time relays. This may allow avoiding long booting times of the controll device and ensure a high degree of variability to adapt the cleaning device for the use in combination with different kinds of coating appratuses.

This may render providing different user levels obsolete. Moreover, this may allow facilitating the use of the cleaning device and avoid complex user interfaces. Moreover, this may allow for maintenance procedures as the cleaning device may be simply disconnected from the supply connections.

In addition, this may ensure a high degree of ecologial sustainability of the cleaning device, as it may be adapted to refrain from energy consumption in a stand-by mode and it does not contain any elements or materials requiring sophisticated waste disposal procedures, such as rechargeable batteries.

One or more of the ejection nozzles may be adapted as rotary nozzles. A rotary nozzle is a nozzle which ejects a rotating flow of cleaning gas and/or which rotates while ejecting the cleaning gas. The rotary nozzle may be adapted such that the flow of cleaning gas flowing through the rotatray nozzles causes a rotational movement of at least a part of the rotary nozzle. In other words, the rotary nozzle may be driven by the flow of cleaning gas flowing through the rotary nozzle prior to being ejected by the rotary nozzle. The rotary nozzle may provide the advantage that an improved punctural cleaning may be achieved. Thereby, the rotary nozzle may generate a small-scale air vortex. A higher velocity and/or force of the airflow may be achieved, which may cause a detachment of strongly adhesive particles on the substrate and/or on at least a part of the calotte-shaped substrate holder.

The cleaning device may comprise multiple ejection nozzles adapted as rotary nozzles. The cleaning device may comprise one or more ejection nozzles adapted as rotary nozzles and one or more ejection nozzles not configured as rotary nozzles, i.e. as stationary nozzles. In a further embodiment the at least one rotary nozzle may be movable to provide a punctural cleaning without the need of several stationary rotary nozzles. This may enable an efficent cleaning with less complexity.

The cleaning device may comprise one or more ionization elements adapted to deactivate electrical surface charges at the surface of the mounted substrate while undergoing a cleaning process. The one or more ionization elements may be arranged at the first and/or second cleaning arm. The one or more ionization elements may be integrated into one or more ejection nozzles and/or suction nozzles and/or into a nozzle assembly. The one or more ionzation elements may be adapted to emit and/or eject charged particles onto the one or more substrates undergoing the cleaning process in order to deactive electrical charges which may be attached to the surface(s) of the one or more substrates to be coated. This may allow removing electrically charged contaminations from the surface of the substrate(s) which may otherwise not be easily removable by the cleaning gas.

The first and/or second celaning arm may be provided with a filter element suitable for filtering particles of contaminants blown off from the substrate by the ejected cleaning gas. This may allow for trapping such contaminants which may not be sucked into a suction nozzles directly after being blown off by the ejected cleaning gas. The filter element may comprise a suspended particle air filter. The filter element may comprise a HEPA filter. This may provide the advantage that a trapping of such particles may be realized, which may not be collected directly after being blown off the surface of the substrate.

The cleaning device may comrpise at least one nozzle assembly having an ejection nozzle and a suction nozzle integrated. The suction nozzle may be arranged such as to surround the ejection nozzle in order to collect at least a part of the flow of cleaning gas ejected onto the surface of the substrate and reflected towards the nozzle assembly. The nozzle assembly may further include one or more ionization elements.

The cleaning device may comprise multiple suction nozzles, wherein one or more suction nozzles are arranged at the same side of the substrate as the one or more ejection nozzles ejecting the cleaning gas to the substrate and one or more suction nozzles arranged at the opposite side of the substrate with respect to the one or more ejection nozzles. This may allow for sucking the cleaning gas from two sides of the substrate. In particular, this may allow for collecing such a flow of cleaning gas with the one or more suction nozzles arranged at the opposite side, which is not reflected at the surface of the substrate but extends beyond the substrate and, thus, may not be easily collected with the one or more suction nozzles arranged at the same side of the substrate as the ejection nozzle. By such an arrangement, a particularly efficient removal of the cleaning gas may be achieved after being ejected onto the substrate.

All disclosures provided for the method shall be regarded as valid for the method and the system alike, and vice versa.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures to illustrate the disclosure without limiting the disclosure to the described embodiments.

Optional embodiments of the disclosure will be illustrated in the following with reference to the drawings. The figures show:
- Figures 1A and 1B:: a cleaning device according to an optional embodiment in a perspective view and in a side view;
- Figures 2A and 2B:: an enlarged view on some parts of the cleaning arms of the cleaning device presented in Figures 1A and 1B;
- Figure 3A:: a schematic sketch of a conventional coating device;
- Figure 3B:: an exemplary photograph of a conventional coating device;
- Figure 3C:: a schematic sketch of a cleaning device according to an embodiment as presented in Figure 1B arranged next to an opened coating device;
- Figure 4:: a schematic illustration of arranging a cleaning device at a coating device;
- Figure 5:: a cleaning device according to an optional embodiment;
- Figure 6:: an exemplary illustration of the inflow and outflow of cleaning gas;
- Figures 7A to 7C:: a flippable mount and its interaction with a fixation element according to an exemplary embodiment;
- Figure 8:: a method for cleaning multiple substrates;
- Figure 9:: a method for manufacturing a spectacle lens;
- Figure 10:: a nozzle assembly according to an optional embodiment;
- Figure 11:: an exemplary arrangement of a nozzle assembly and a filter element.

In the drawings the same reference signs are used for corresponding or similar features in different drawings.

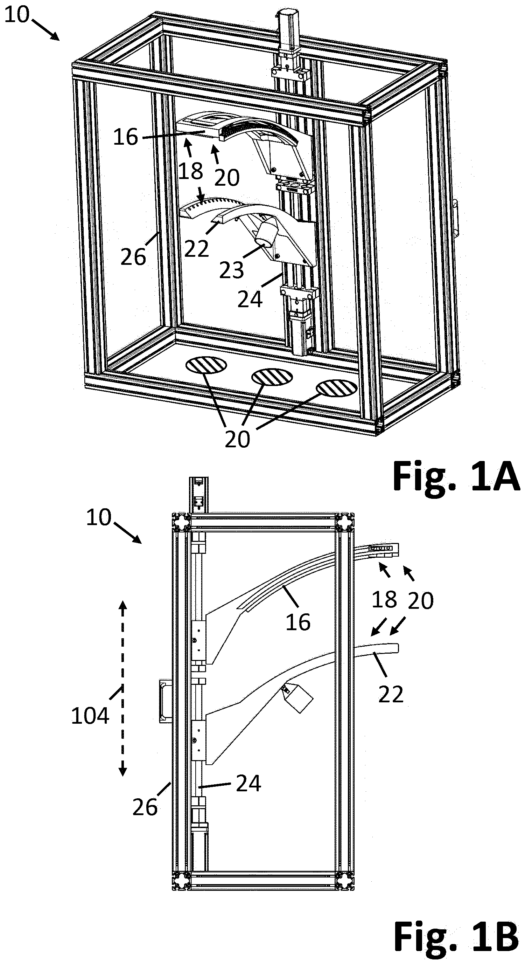

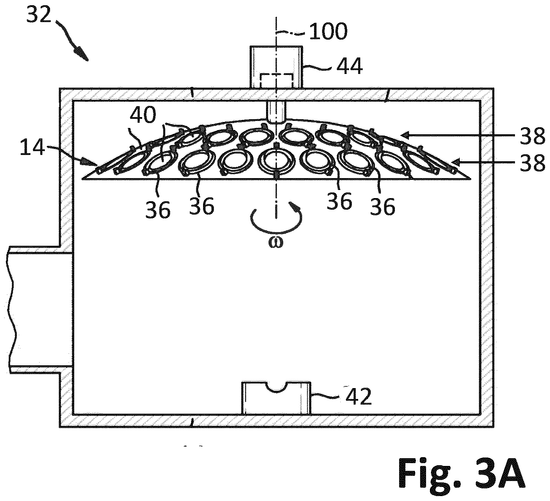

Figures 1A and 1B show a cleaning device 10 according to an optional embodiment in a perspective view (Figure 1A) and in a side view. The cleaning device 10 is adapted for cleaning substrates 40 mounted on a conventional calotte-shaped substrate holder 14 (exemplarily shown in Figure 3A), wherein the calotte-shaped substrate holder 14 is rotatable in an azimuthal direction 102 around a central axis 100 of the calotte-shaped substrate holder 14. The cleaning device 10 comprises a first cleaning arm 16 having one or more ejection nozzles 18 arranged at the first cleaning arm 16. The first cleaning arm 16 has a circular arc-shape, wherein the radius of curvature may be within the range from 0,5 m to 2 m and a length in an altitudinal direction 106 in the range from 0,5 m to 2 m.

The ejection nozzles (18) are adapted to providing an inflow of a cleaning gas for cleaning the substrates 40 mounted on the calotte-shaped substrate holder 14.

The cleaning device 10 further comprises suction nozzles 20 for providing an outflow of at least a part of the cleaning gas that flowed in. According to the presented embodiment a part of the suction nozzles 20 are arranged adjacent to the ejection nozzles 18 and a part of the suction nozzles (20) are arranged at the bottom of the cleaning device. The suction nozzles 20 may be connected to the aspiration from underneath the cleaning device. In a further embodiment, a part of the suction nozzles (20) may be arranged on at least one side wall of the cleaning device.

The cleaning device 10 is adapted such that a difference between a flow rate of the outflow of the cleaning gas and a flow rate of the inflow of the cleaning gas is 20% of the low rate of the inflow or less. Optionally, the difference between the flow rate of the outflow of the cleaning gas and the flow rate of the inflow of the cleaning gas may be 10% of the low rate of the inflow or less. Optionally, the flow rate of the outflow of the cleaning gas may essentially correspond to the flow rate of the inflow of the cleaning gas. This may be achieved by providing the ejection nozzles and the suction nozzles in a suitable number and with suitable dimensions. For instance, the total cross-sectional area of the ejection nozzles may correspond or be similar to the total cross-sectional area of the suction nozzles. In case the pressure and, thus, the streaming velocity through the ejection nozzles differ from a streaming velocity of the suction nozzle, their cross-sectional areas may be adapted to compensate this difference. Alternatively or additionally, the ratio between the inflow flow rate and the outflow flow rate may be at least partially achieved by adjusting a pressure for providing the cleaning gas and a pressure for providing the vacuum for the suction nozzles.

Moreover, the cleaning device 10 comprises a second cleaning arm 22 having one or more ejection nozzles 18 arranged at the second cleaning arm 22, wherein also the second cleaning arm 22 has an arc-shape, optionally with a radius of curvature in the range from 0,5 m to 2 m and a length in an altitudinal direction 106 in the range from 0,5 m to 2 m. The shape of the second cleaning arm 22 corresponds to the shape of the first cleaning arm 16. The second cleaning arm 22 further comprises a valve 23 for connecting hoses or tubing for providing pressured cleaning gas at the ejection nozzles 20.

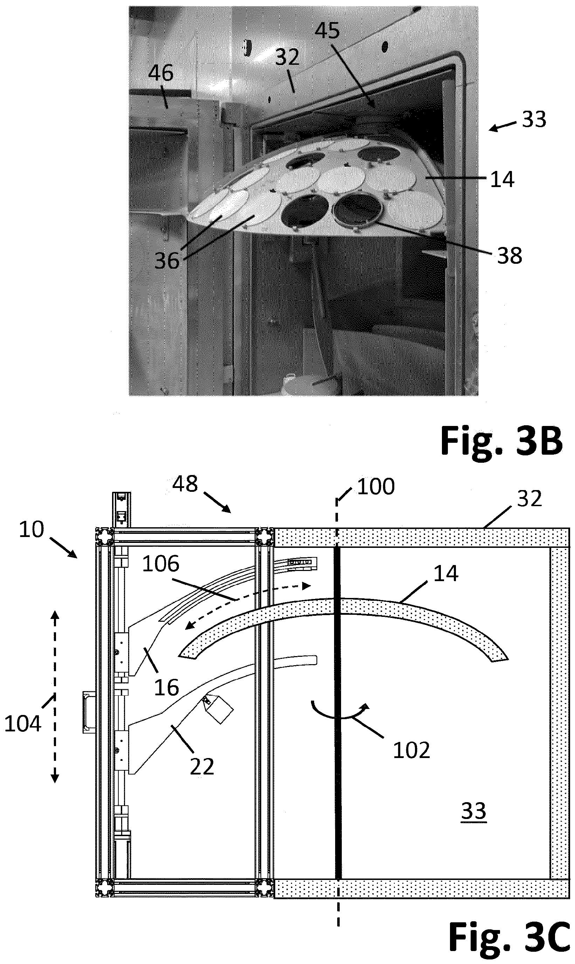

The cleaning device 10 comprises one or more vertical posts 24 extending in the vertical direction 104 on which the first and the second cleaning arm 16, 22 are mounted. The cleaning arms 16, 22 are movable in a vertical direction along the one or more vertical posts 24. Moreover, the cleaning device 10 comprises a frame structure 26 to support and stabilize the cleaning device 10. According to some embodiments, the frame structure 26 may be adapted to allow arranging the cleaning device 10 in such a manner to adjoin a coating device 32 (see Figure 3C), which may at least partially house the calotte-shaped substrate holder 14. The cleaning device may have end markers which may limit the range of movement in the vertical direction 104. The end markers may be attached to the vertical posts 24 and may be adjustable to allow adjusting the range of movement to different vacuum chambers to which the cleaning device shall be attached.

The frame structure 26 may be closed with plate elements extending between the frame elements to form a closed housing of the cleaning device 10. This may allow preventing an ingress of contaminants into the cleaning device 10 and/or into a coating device 32, when the cleaning device 10 is arranged at the opening of the coating device 32. In addition, this may protect a user from interfering with the moving calotte-shaped substrate holder 14. Moreover, the frame structure 26 may comprise one or more openable elements to entirely close the cleaning device during stand-by and to open the cleaning device 10 during operation.

According to the presented embodiment, the first cleaning arm 16 and the second cleaning arm 22 are arranged parallel to each other and spaced apart from each other in a vertical direction 104. This may allow arranging a side wall of a calotte-shaped substrate holder 14 to extend between the first and the second cleaning arm 16, 22 such that a distance between the first cleaning arm 16 and the calotte-shaped substrate holder 14 and between the second cleaning arm 22 and the calotte-shaped substrate holder 14 are optionally constant over the entire overlapping region of the calotte-shaped substrate holder 14 and the first and second cleaning arm 16, 22, respectively. According to an optional embodiment, the vertical spacing between the first cleaning arm 16 and the second cleaning arm 22, i.e., along the vertical direction 104, may be in a range from 0,01 m to 0,5 m and in particular in a range from 0,1 m to 0,2 m. This may offer a suitable space for arranging the calotte-shaped substrate holder 14 in-between, and to provide a suitable distance between the cleaning arms 16, 22 and the calotte-shaped substrate holder 14 to ensure a sufficient stream of cleaning gas for a reliable cleaning of the substrates 40 mounted on the calotte-shaped substrate holder 14.

The first cleaning arm 16 and the second cleaning arm 22 are directed towards each other such that substrates 40 mounted on a calotte-shaped substrate holder 14 may be simultaneously cleaned from both sides, i.e. from the top and from underneath. For this purpose, the ejection nozzles 18 of the first and/or second cleaning arm 16, 22 and the ejection nozzles 18 of the first and second cleaning arm 16, 22 are at least partly directed towards each other.

The second cleaning arm 22 further comprises a valve 23 for connecting hoses or tubing for providing pressured cleaning gas to the ejection nozzles 20.

The ejection nozzles 18 are directed in a radial direction with respect to the arc-shaped first cleaning arm 16. The one or more ejection nozzles 18 comprise multiple ejection nozzles 18 distributed in an altitudinal direction 106 on the arc-shaped first cleaning arm 16.

The cleaning device 10 may be adapted such that the inflow of the cleaning gas for cleaning the substrates is provided by the one or more ejection nozzles arranged at the first cleaning arm and by the one or more ejection nozzles arranged at the second cleaning arm simultaneously such that the substrates are simultaneously subjected to the inflow of cleaning gas from at least two directions.

As can be seen in Figure 1A, at least some of the suction nozzles are arranged separate from the first and second cleaning arm 16, 22.

Alternatively or additionally, one or more suction nozzles 20 may be arranged at the first cleaning arm 16 and/or at the second cleaning arm 22.

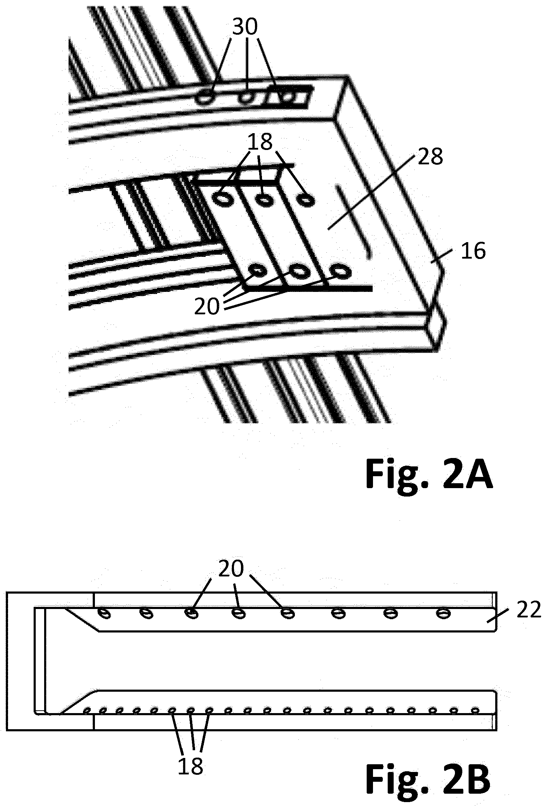

Figures 2A and 2B reveal an enlarged view on some parts of the cleaning arms 16, 22 of a cleaning device 10 according to such an optional embodiment. In particular, the perspective views presented in Figures 2A and 2B show the ejection nozzles 18 mounted at the respective cleaning arms 16, 22. The presented cleaning arms 16, 22 differ from each other in their configuration. The cleaning arm 16 shown in Figure 2A comprises three ejection nozzles 18 and three suction nozzles 20 mounted on a sledge 28 movable along the cleaning arm 16. A linear actuator may be provided for moving the sledge 28 along the cleaning arm 16. For cleaning multiple substrates 40 mounted in several concentrical rows 38 of mounting slots 36 (see Figure 3A) on the calotte-shaped substrate holder 14, the sledge 28 may be moved along the cleaning arm 16 to rearrange the ejection nozzles 18 and suction nozzles 20 with respect to the rows 38 of mounting slots 36 in order to sequentially cover all rows 38 of mounting slots 36. The movement of the sledge 28 may be combined with rotating movement the calotte-shaped substrate holder 14 around its central axis 100 in order to cover all mounting slots 36 in each of the rows 38. The rotation movement of the calotte-shaped substrate holder 14 and the movement of the sledge 28 along the cleaning arm 16, which corresponds to an altitudinal movement with respect to the calotte-shaped substrate holder 14, may be effectively combined to a spiral movement. Alternatively or additionally, the sledge 28 may be moved in a stepwise manner when a full rotation of the calotte-shaped substrate holder 14 is completed, to arrange the ejection nozzles 18 at the next row of mounting slots 36. The sledge 28 may be moved along the cleaning arm 16 by means of a gear rack following the shape of the cleaning arm 16. Interfaces 30 for connecting a supply of cleaning gas and/or for suction may be provided at the sides of the sledge 28. This set-up may have the effect to avoid an undesired interference with the stream of the cleaning gas and which allows possible hoses connected to the sledge 28 to follow the sledge's 28 movements in an undisturbed manner. According to other embodiments, the number of ejection nozzles 18 and suction nozzles 20 arranged on the sledge 28 may differ from each other. Therefore, according to an optional embodiment the at least one of the one or more ejection nozzles 18 may be movable in an altitudinal direction 106 along the cleaning arm 16.

The cleaning arm 22 presented in Figure 2B has multiple ejection nozzles 18 and suction nozzles 20 arranged along the cleaning arm 22. The ejection nozzles 18 and suction nozzles 20 may be equally spaced from each other and may be distributed over a sufficient length of the cleaning arm 22 to extend in an altitudinal direction 106 over all rows 38 of mounting slots 36 provided in a respective calotte-shaped substrate holder 14. This may allow cleaning all substrates 40 mounted in the calotte-shaped substrate holder 14 within one rotation of the substrate holder 14 without a need of moving the ejection nozzles 18 and suction nozzles 20 in an altitudinal direction 106. Accordingly, a cleaning 16 arm according to this embodiment does not require ejection nozzles 18 and/or suction nozzles 20 mounted on a sledge 28 (as compared to Figure 2A). Hence, the one or more ejection nozzles 18 comprise multiple ejection nozzles 18 distributed in the altitudinal direction 106 on the cleaning arm 22.

In general, the cleaning device 10 may comprise a first cleaning arm 16 and a second cleaning arm 22. Each of these cleaning arms 16, 22 may be formed according to any one of the presented embodiments. The cleaning arms 16 and 22 may have an identical configuration or differ from each other.

The one or more ejection nozzles 18 and/or the one or more suction nozzles 20 may be directed in a radial direction with respect to the first cleaning arm 16. This may allow directing the stream of cleaning gas directly onto the substrates 40 mounted at the substrate holder 14. However, the direction of the ejection nozzles 18 and the suction nozzles 20 may be tilted with respect to the radial direction in order to achieve a continuous stream of cleaning gas from the ejection nozzles 18 to the suction nozzles 20 over the substrates 40.

Figure 3A exemplarily depicts a schematic sketch of a conventional coating device 32 having a conventional calotte-shaped substrate holder 14 arranged therein, as described for instance in WO 2022/012955 A1. The calotte-shaped substrate holder 14 is dome-shaped and provides multiple mounting slots 36, which are arranged in several rows 38 (two rows according to the presented exemplary calotte-shaped substrate holder 14) extending in a concentrical manner around a central axis 100. Each mounting slot 36 may receive a substrate 40 and hold the substrate 40 such that a lower surface may be exposed to the particle vapor provided by the evaporation source 42. The calotte-shaped substrate holder 14 is rotatable around the central axis 100. The rotational movement may be affected by a motor unit 44. Alternatively or additionally, during a cleaning process the rotational movement of the calotte-shaped substrate holder 14 may be provided by a driving unit of the cleaning device 10.

Figure 3B shows an exemplary photograph of a conventional coating device 32. The coating device 32 may have a vacuum chamber with a closeable opening 45, which may be closed by a door 46, which may allow accessing the inside of the coating device 32 and, hence, the calotte-shaped substrate holder 14. In particular, when the opening 45 of the coating device 32 is opened, for instance by opening the door 46, at least a part of the calotte-shaped substrate holder 14 may protrude outside the coating device 32 and may be accessed by a cleaning device 10 according to an embodiment of the disclosure.

Figure 3C shows a schematic sketch of a cleaning device 10 according to an embodiment as presented in Figure 1B arranged next to the opening 45 of an opened coating device 32. The part of the calotte-shaped substrate holder 14 protruding from the coating device 32 extends in the altitudinal direction 106 between the first cleaning arm 16 and the second cleaning arm 22, such that the cleaning arms 16, 22 extend in the altitudinal direction 106 over all rows 38 of mounting slots 36 provided in the calotte-shaped substrate holder 14. By rotating the calotte-shaped substrate holder 14 in the azimuthal direction 102, all substrates 40 mounted in the mounting slots 36 on the calotte-shaped substrate holder 14 may be cleaned. When the cleaning process is completed, the cleaning device 10 may be removed from the coating device 32, and the coating device 32 may be closed to carry out a process for coating the mounted and cleaned substrates 40. Thus, Figure 3C depicts a system 48 for cleaning and coating substrates 40, wherein the system 48 comprises a calotte-shaped substrate holder 14 suitable for holding the substrates 40 during a cleaning and coating process and a cleaning device 10 having the features of claim 1. Moreover, the system 48 may include the entire coating device 32.

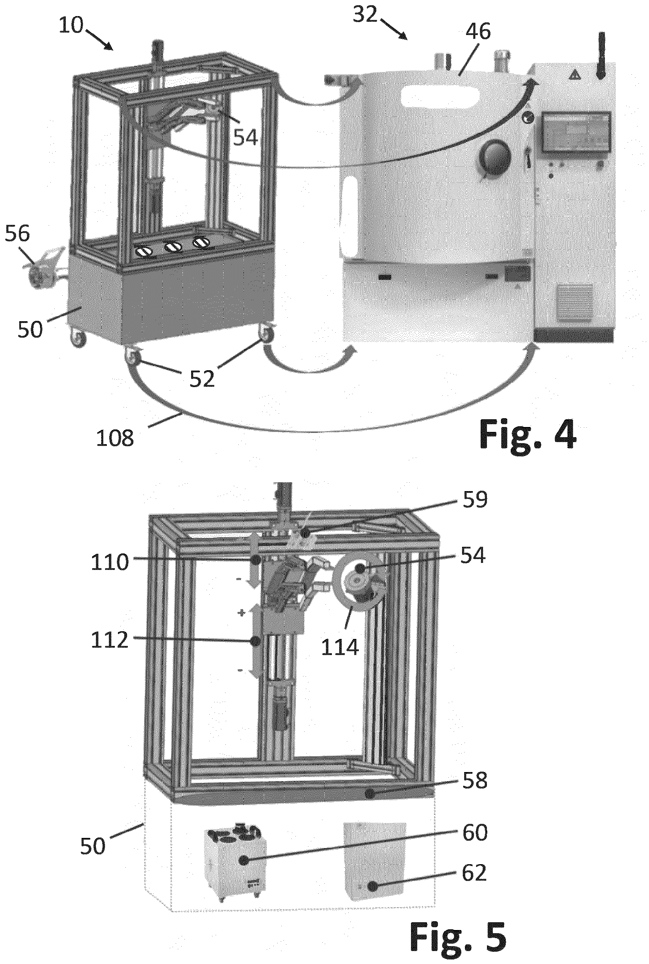

Figure 4 schematically depicts a cleaning device 10 being arrangeable at a coating device 32 for cleaning substrates mounted at a calotte-shaped substrate holder 14 arranged inside the coating device. The cleaning device 10 has a mobile base frame 50 comprising multiple wheels 52. The mobile base frame 50 allows rearranging the cleaning device 10 to the opening 45 of the coating device 32, as indicated by arrows 108, after opening the door 46. Moreover, according to the optional embodiment presented in Figure 4, the cleaning device 10 comprises a driving unit 54, which enables the cleaning device 10 to rotate the calotte-shaped substrate holder 14 during the cleaning process without a need for using the control means of the coating apparatus 32. The driving unit 54 may comprise a motor and a cam for driving the calotte-shaped substrate holder.

The mobile base frame 50 may house a source for providing vacuum to the suction nozzles and/or pressured cleaning gas to the ejection nozzles.

The cleaning device 10 further comprises one or more connectors 56 for supplying the cleaning device with electrical energy from an external electrical energy source. In another embodiment the cleaning device 10 may be powered by other forms of energy (e.g., by compressed air).

Figure 5 schematically depicts a cleaning device 10 according to an optional embodiment, exemplarily indicating the range of movement 110 of the first cleaning arm 16 and the range of movement 112 of the second cleaning arm 22 in the vertical direction 104. Moreover, Figure 5 shows the driving unit 54 having a motor to rotate a cam in direction 114. When in contact with the calotte-shaped substrate holder 14, the driving unit allows rotating the calotte-shaped substrate holder 14 around its central axis 100. Moreover, the cleaning device may comprise an openable element 58, such as a roller blind, which allows partially or fully closing the front opening of the cleaning device 10, eventually after bringing the first arm 16 and the second arm into a non-protruding parking position. The device may further comprise a safety switch 59 for shutting down the cleaning device 10 when removed from the coating device 32.

In addition, as schematically indicated underneath the frame structure 26 of the cleaning device 16, the aspiration 60 and/or a control box 62 may be provided in the mobile base frame 50. In general, the aspiration may be regarded as a vacuum source and vice versa.

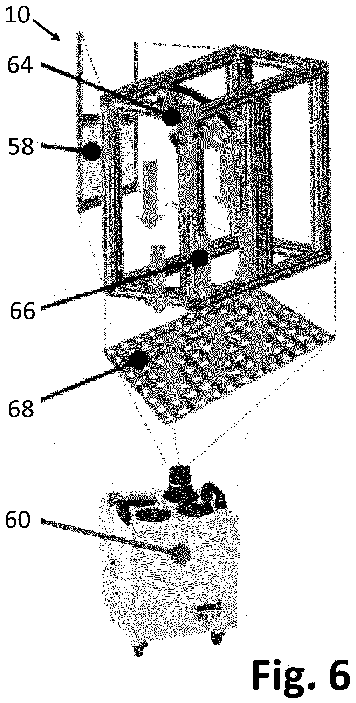

Figure 6 schematically depicts the interaction of the ejection nozzles 18 providing the inflow 64 of cleaning gas, and the suction nozzles 20 providing the outflow 66 of the cleaning gas into the aspiration 60. The suction nozzles 18 may be provided by a perforated sheet 68, wherein the perforations form the suction nozzles 18. The perforated sheet 68 may be arranged at the bottom of the frame structure 26 between the cleaning arms and the vacuum source 60. In a further embodiment, the cleaning device may not have a perforated sheet. Moreover, Figure 6 schematically illustrates the openable element 58 provided as a roller blind.

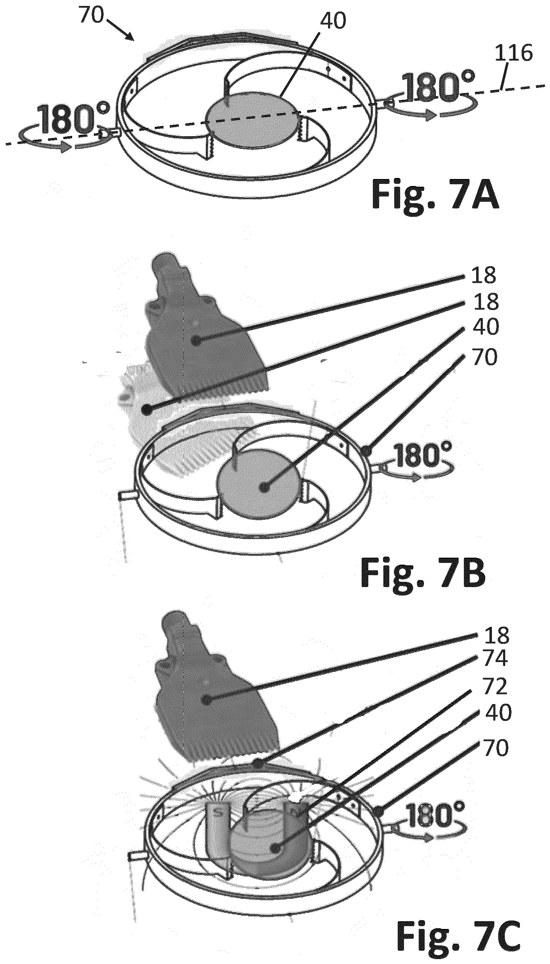

Figures 7A to 7C depict a flippable mount 70 for holding a substrate 40 while mounted at a mounting slot 36 of the calotte-shaped substrate holder 14. The flippable mount 70 may be placed at a mounting slot 36 of the calotte shaped substrate holder 14 and may allow flipping the substrate 40 by at least 180° around a flip axis 116. This may allow flipping the substrates 40 mounted at the calotte shaped substrate holder 14 in the evacuated vacuum chamber without a need of venting and/or opening the vacuum chamber.

As shown in Figure 7B, the cleaning device 10 may be adapted to eject the cleaning gas onto the substrate 40 simultaneously from at least two sides, i.e. from the top side and from the bottom side by providing one or more ejection nozzles 18 on top of the substrate and one or more ejection nozzles underneath the substrate 40. This may prevent an undesired flipping of the flippable mount 70 when exposed to the ejected cleaning gas, as the cleaning gas impinges from both sides onto the substrate 40 and therefore no sufficient angular momentum is applied to the flippable mount 70 to flip the flippable mount 70. Depending on the size of the substrate 40, different amounts of cleaning gas may pass a gap between the substrate 40 and the one or more fixation elements 72. Therefore, the ejected cleaning gas of the one or more ejection nozzles may be adjusted individually. This may allow a fixation of the flippable mount 70 regardless of the size of the substrate 40.

As shown in Figure 7C, the cleaning device 10 may comprise one or more fixation elements 72 for fixating the substrates 40 mounted on a calotte-shaped substrate holder 14 while subjecting the substrates 40 to the inflow of the cleaning gas. The one or more fixation element 72 may be adapted to fixate the substrates 40 by fixating the respective holding element, i.e. the flippable mount 70, in which the respective substrate 40 is mounted. The substrate holder may be provided as or comprise the flippable mount 70. The fixation element 72 may be adapted to fixate the substrates by applying mechanical force and/or a magnetic force and/or an electrical force to the respective holding element. The fixation element 72 may comprise a permanent magnet and/or an electric magnet to apply a magnetic force to a magnetic part 73 of the holding element or the flippable mount 70. This may prevent an undesired flipping of the flippable mount 70 when exposing the substrate 40to ejected cleaning gas from only one direction applying an angular momentum to the flippable mount 70.

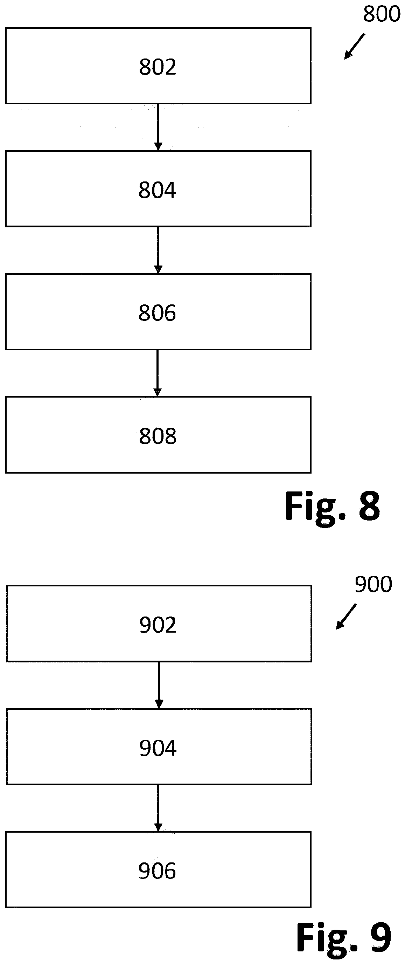

With reference to Figure 8 a method 800 for cleaning multiple substrates 40 is presented.

The method 800 comprises in a step 802 the arranging of a calotte-shaped substrate holder 14 in a vacuum chamber 33, the calotte-shaped substrate holder 14 having the substrates 40 mounted at mounting slots 36 on the calotte-shaped substrate holder 14, wherein the mounting slots 36 may be arranged on the calotte-shaped substrate holder 14 in one or more rows 38 extending in a concentric manner around a central axis 100 of the calotte-shaped substrate holder 14.

The method 800 further comprises in step 804 arranging a cleaning device 10 at a closable opening 45 of the vacuum chamber 33, wherein the cleaning device 10 has one or more ejection nozzles 18 for providing an inflow of a cleaning gas for cleaning the substrates 40 mounted on the calotte-shaped substrate holder 14 and one or more suction nozzles 20 for providing an outflow of at least a part of the cleaning gas that flowed in.

In step 806, the method 800 comprises cleaning the substrates 40 by providing an inflow of a cleaning gas through one or more ejection nozzles 18 onto the substrate holder 14 and providing an outflow of at least a part of the ejected cleaning gas into one or more suction nozzles 20, wherein a difference between a flow rate of the outflow of the cleaning gas and a flow rate of the inflow of the cleaning gas is 20% of the low rate of the inflow or less. This step includes providing a rotational movement of the calotte-shaped substrate holder 14 in an azimuthal direction 102 around the central axis 100 with respect to the cleaning device 10.

The method 800 further comprises the step 808 of removing the cleaning device 10 from the closable opening 45 of the vacuum chamber 33.

Figure 9 schematically depicts a method 900 being suitable for manufacturing a spectacle lens from a substrate 40 for a spectacle lens. The method 900 comprising cleaning 902 the substrate 40 for the spectacle lens using a method 800 according to the embodiment illustrated in Figure 8. The method 900 further comprises 904 closing the closable opening 45 of the vacuum chamber 33 and evacuating the vacuum chamber 33. The method 900 further comprises applying 906 an optical coating to the substrate 40 for the spectacle lens in the vacuum chamber 33.

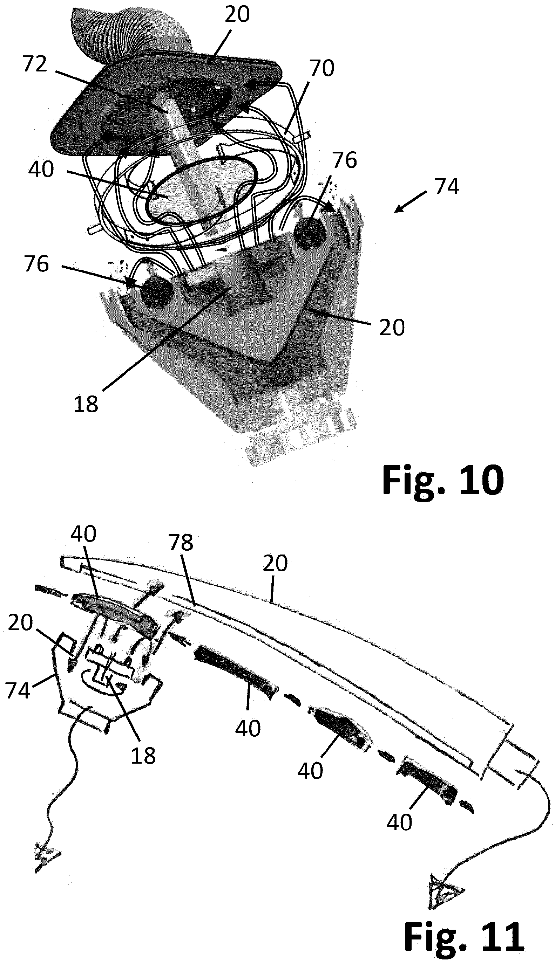

Figure 10 depicts a nozzle assembly 74 according to an optional embodiment. The nozzle assembly 74 comprises an ejection nozzle 18, which is adapted as a rotary nozzle. Moreover, the nozzle assembly 74 comprises a suction nozzle 20 surrounding the ejection nozzle 18 in order to collect at least a part of the flow of cleaning gas ejected onto the surface of the substrate 40 and reflected towards the nozzle assembly 74.

In addition, the nozzle assembly 74 comprises an ionization element 76 arranged between the ejection nozzle 18 and the suction nozzle 20, wherein the ionization element 76 is adapted to deactivate electrical surface charges at the surface of the mounted substrate 40 while undergoing a cleaning process. The ionization element 76 is integrated into nozzle assembly 74. The ionzation elements 76 may be adapted to emit and/or eject charged particles onto the one or more substrates 40 undergoing the cleaning process in order to deactive electrical charges possibly attached to the surface(s) of the one or more substrates 40 to be coated. This may allow removing electrically charged contaminations from the surface of the substrate(s) 40 which may otherwise not be easily removable by the cleaning gas.

As indicated in the figure, the rotary nozzle ejects the cleaning gas such that a curved flow of the cleaing fluid is ejected towards the substrate 40. The ejected flow of cleaning gas may be a turbulent flow. The flow of cleaning gas may be partly refleced at the substrate and partially extending beyond the substrate 40.

An additional suction nozzle 20 may be provided at an opposing side of the nozzle assembly 74 in order to collect the flow of cleaning gas extending beyond the substrate 40. When arranging the nozzle arrangement 74 underneath the substrate 40, the further suction nozzle 20 may be arranged on top of the substrate and vice versa.

The fixation element 72 is provided by an electromagnet and is adapted to fixate the flippable mount 70 and the substrate in a predetermined first position when providing the magnetic field with a first polarity and flipping the flippable mount 70 into a predetermined second position when providing the magnetic field with a second polarity. The fixation element 72 may be mounted on the first cleaning arm. In a further embodiment, the fixation element may be mounted on the first cleaning arm and/or on the second cleaning and/or on a further cleaning arm. In another embodiment, fixation elements 72 may be mounted on the substrate holders 14. Alternatively, the fixation element 72, i.e. the electromagnet, may be arranged at or within the nozzle assembly 74.

Figure 11 shows in a schematic view an arrangement of a nozzle assembly 74 of a cleaning device in combination with a filter element 78 of the cleaning device. The filter element 78 may be attached to a first cleaning arm and/or a second cleaning arm of the cleaning device. The filter element 78 may be provided for filtering particles of contaminants blown off from the substrate 40 by the cleaning gas ejected from the nozzle assembly 74. This allows for trapping such contaminants which may not be sucked into a suction nozzle 20 of the nozzle assembly 74 directly after being blown off by the ejected cleaning gas but are blown to the opposite side of the substrate 40. The filter element 78 may comprise a suspended particle air filter. The filter element may comprise a HEPA filter. The filter element may be attached to a further suction nozzle 20 in order to filter the contaminant particles from the flow of cleaning gas sucked into the further suction nozzle 20. This may provide the advantage that a cost-efficient trapping of such particles may be realized, which may not be collected directly after being blown off the surface of the substrate.

The nozzle arrangement 74 maybe movable to be sequentially directed to multiple substrates, for instance by sequentially moving the nozzle assembly 74 from one substrate 40 to the next substrate 40. The filter element 78 and the further suction nozzle 20 may extend such as to cover multiple substrates 40.

### List of reference signs

- 10: cleaning device
- 14: calotte-shaped substrate holder
- 16: first cleaning arm
- 18: ejection nozzle
- 20: suction nozzle
- 22: second cleaning arm
- 23: valve
- 24: vertical post
- 26: frame structure
- 28: sledge
- 30: interface
- 32: coating device
- 33: vacuum chamber
- 36: mounting slot
- 38: row of mounting slots
- 40: substrate
- 42: evaporation source
- 44: motor unit
- 45: closable opening
- 46: door of coating device
- 48: system for cleaning and coating substrates
- 50: mobile base frame
- 52: wheel
- 54: driving unit
- 56: connector
- 58: openable element
- 59: safety switch
- 60: aspiration
- 62: control box
- 64: inflow
- 66: outflow
- 68: perforated sheet
- 70: flippable mount
- 72: fixation element / electromagnet
- 73: magnetic part of the holding element
- 74: nozzle assembly
- 76: ionization element
- 78: filter element

- 100: central axis
- 102: azimuthal direction
- 104: vertical direction
- 106: altitudinal direction
- 108: movement for attaching cleaning device to coating device
- 110: range of movement of first cleaning arm
- 112: range of movement of second cleaning arm
- 114: rotational movement of driving unit

- 800: method for cleaning substrates for spectacle lenses
- 802-808: method steps
- 900: method for manufacturing a spectacle lens
- 902-906: method steps

## Claims

1. Cleaning device (10) adapted for cleaning substrates (40) for spectacle lenses mounted on a calotte-shaped substrate holder (14), wherein
the cleaning device (10) comprises:
- one or more ejection nozzles (18) for providing an inflow of a cleaning gas for cleaning the substrates (40) mounted on the calotte-calotte-shaped substrate holder (14); and
- one or more suction nozzles (20) for providing an outflow of at least a part of the cleaning gas that flowed in;
**characterized in that**
the cleaning device (10) is adapted such that a difference between a flow rate of the outflow of the cleaning gas and a flow rate of the inflow of the cleaning gas is 20% of the low rate of the inflow or less.

2. Cleaning device (10) according to claim 1, wherein at least one of the one or more suction nozzles (20) is located adjacent to the one or more ejection nozzles (18).

3. Cleaning device (10) according to any one of the claims 1 to 2, wherein at least one of the one or more suction nozzles (20) is located at a bottom of the cleaning device and/ or on at least one side wall of the cleaning device.

4. Cleaning device (10) according to any one of the claims 1 to 3, wherein the difference between the flow rate of the outflow of the cleaning gas and the flow rate of the inflow of the cleaning gas is 10% of the low rate of the inflow or less.

5. Cleaning device (10) according to claim 1 or 2, wherein the flow rate of the outflow of the cleaning gas essentially corresponds to the flow rate of the inflow of the cleaning gas.

6. Cleaning device (10) according to claim 1, further comprising a first cleaning arm (16) having an arc shape;
wherein at least one of the one or more ejection nozzles (18) is arranged at the first cleaning arm (16); and/or
wherein at least one of the one or more suction nozzles (20) is arranged at the first cleaning arm (16), and
wherein the one or more ejection nozzles (18) are optionally directed in a radial direction with respect to the arc-shaped first cleaning arm (16).

7. Cleaning device (10) according to claim 6, wherein the one or more ejection nozzles (18) comprise multiple ejection nozzles (18) distributed in an altitudinal direction (106) on the arc-shaped first cleaning arm (16).

8. Cleaning device (10) according to any one of the claims 6 to 7, further comprising a second cleaning arm (22) having an arc shape and one or more ejection nozzles (18) arranged at the second cleaning arm (22), wherein the one or more ejection nozzles (18) are directed in a radial direction with respect to the arc-shaped second cleaning arm (16), and
wherein the cleaning device is optionally adapted such that the inflow of the cleaning gas for cleaning the substrates (40) is provided by the one or more ejection nozzles (18) arranged at the first cleaning arm (16) and by the one or more ejection nozzles (18) arranged at the second cleaning arm (22) simultaneously such that the substrates are simultaneously subjected to the inflow of cleaning gas from at least two directions.

9. Cleaning device (10) according to any one of the claims 6 to 8, wherein at least one of the suction nozzles (20) is arranged separate from the first cleaning arm (16) and the second cleaning arm (22).

10. Cleaning device (10) according to any one of the preceding claims, comprising one or more fixation elements (72) for fixating the substrates (40) mounted on a calotte-shaped substrate holder (14) while subjecting the substrates (40) to the inflow of the cleaning gas.

11. Cleaning device (10) according to claim 10, wherein the one or more fixation elements (72) are adapted to fixate the substrates (40) by fixating a holding element in which the respective substrates (40) are mounted, wherein the one or more fixation elements (72) are adapted to fixate the substrates (40) by applying a fixation force, wherein the fixation force may comprise a mechanical force and/or a magnetic force and/or an electrical force to the respective holding element.

12. Cleaning device (10) according to any one of the preceding claims, wherein the cleaning device (10) comprises at least one nozzle assembly (74), wherein at least one ejection nozzle (18) and at least one suction nozzle (20) are integrated in the nozzle assembly (74).

13. Cleaning device (10) according to any one of the preceding claims, wherein at least one ejection nozzle (18) is adapted as a rotary nozzle.

14. System (48) for cleaning and coating substrates (40), the system (48) comprising a calotte-shaped substrate holder (14) suitable for holding the substrates (40) during a cleaning and coating process, the calotte-shaped substrate holder (14) being rotatable in an azimuthal direction (102) around a central axis (100) of the calotte-shaped substrate holder (14);
wherein the system (48) is **characterized in that** it further comprises a cleaning device (10) having the features of any one of the preceding claims.

15. System (48) according to claim 14, wherein the calotte-shaped substrate holder (14) is arranged in a vacuum chamber (33) having a closable opening (45), and
wherein the cleaning device (10) may be arranged at the opening (45) such that the first cleaning arm (16) and optionally the second cleaning arm (22) at least partially surround the calotte-shaped substrate holder (14) in an altitudinal direction (106).

16. Method (800) being suitable for cleaning multiple substrates (40) for spectacle lenses, the method comprising:
- arranging (802) a calotte shaped substrate holder in a vacuum chamber, the calotte shaped substrate holder having the substrates (40) mounted at mounting slots (36) on the calotte-shaped substrate holder (14), wherein the mounting slots (36) are arranged on the calotte-shaped substrate holder (14);
**characterized in that** the method (800) further comprises the steps:
- arranging (804) a cleaning device (10) at a closable opening (45) of the vacuum chamber (33), the cleaning device (10) having one or more ejection nozzles (18) for providing an inflow of a cleaning gas for cleaning the substrates (40) mounted on the calotte-shaped substrate holder (14) and one or more suction nozzles (20) for providing an outflow of at least a part of the cleaning gas that flowed in;
- cleaning (806) the substrates (40) by providing an inflow of a cleaning gas through one or more ejection nozzles (18) onto the substrate holder (14) and providing an outflow of at least a part of the ejected cleaning gas into one or more suction nozzles (20), wherein a difference between a flow rate of the outflow of the cleaning gas and a flow rate of the inflow of the cleaning gas is 20% of the low rate of the inflow or less, and providing a rotational movement of the calotte-shaped substrate holder (14) in an azimuthal direction (102) around the central axis (100) with respect to the cleaning device (10); and
- removing (808) the cleaning device (10) from the closable opening of the vacuum chamber (33).

17. Method (900) being suitable for manufacturing a spectacle lens from a substrate (40) for a spectacle lens, the method being **characterized in that** it comprises:
- cleaning (902) the substrate (40) for the spectacle lens using a method (800) according to claim 16;
- closing (904) the closable opening (45) of the vacuum chamber and evacuating the vacuum chamber (33); and
- applying (906) an optical coating to the substrate (40) for the spectacle lens in the vacuum chamber (33).
